# EUROPEAN PATENT SPECIFICATION

(11) **EP 1 685 678 B1**
(45) Date of publication and mention of the grant of the patent: **09.01.2008**
(21) Application number: 04798857.1
(22) Date of filing: 11.11.2004
(51) Int. Cl.: H04L 12/28, H04Q 7/32

(54) **LINK SET UP AND RELAYING IN A HOME AUTOMATION ADHOC NETWORK**
STRECKENAUFBAU UND -WEITERLEITUNG IN EINEM HAUSAUTOMATISIERUNGS-ADHOC-NETZWERK
ETABLISSEMENT ET RELAIS DE LIAISON DANS UN RESEAU AD HOC DE DOMOTIQUE

(30) Priority: 17.11.2003 FR 0313422
(43) Date of publication of application: 02.08.2006
(73) Proprietor: Somfy SAS, 74300 Cluses (FR)
(72) Inventor: BLANPAIN, Yves, F-74370 SAINT MARTIN BELLEVUE (FR); ORSAT, Jean-Michel, F-74300 Chatillon-Sur-Cluses (FR); ANDREASEN, Bjarne, Ravndal, DK-7600 Struer (DK); NIELSEN, Martin, DK-6830 Nr.Nebekl (DK)
(74) Representative: Bugnion Genève
(86) International application number: PCT/IB2004/003727
(87) International publication number: WO 2005/048536

(56) References cited:
- WO-A-02/41590
- WO-A-02/078272
- US-A1- 2002 176 399
- JENNIFER BRAY, CHARLES F STURMAN: "BLUETOOTH 1.1: Connect Without Cables; Second Edition" [Online] 2001, PRENTICE HALL PTR , NJ, USA , XP002288291 ISBN: 0-13-066106-6 Retrieved from the Internet: URL:www.bluetooth.com> [retrieved on 2004-07-13] figures 5-8,5-9,5-15,15-1,18-1,18-5,18-10,21-1-21- 4 page 65 - page 87 page 275 - page 276 page 339 - page 356 page 428 - page 435
- DENG D-J ET AL: "A PRIORITY SCHEME FOR IEEE 802.11 DCF ACCESS METHOD" IEICE TRANSACTIONS ON COMMUNICATIONS, INSTITUTE OF ELECTRONICS INFORMATION AND COMM. ENG. TOKYO, JP, vol. E82-B, no. 1, January 1999 (1999-01), pages 96-102, XP000927880 ISSN: 0916-8516
- JAIN N ET AL: "A multichannel CSMA MAC protocol with receiver-based channel selection for multihop wireless networks" COMPUTER COMMUNICATIONS AND NETWORKS, 2001. PROCEEDINGS. TENTH INTERNATIONAL CONFERENCE ON 15-17 OCT. 2001, PISCATAWAY, NJ, USA,IEEE, 15 October 2001 (2001-10-15), pages 432-439, XP010562128 ISBN: 0-7803-7128-3

## Description

The invention concerns a method of communication according to the preamble of claim 1. The invention also concerns the use of such a communication method to create durable links and concerns a home automation network using radio waves comprising at least three communication points provided with radio signal transceivers, as claimed in claims 6 and 7, respectively.

Such a method can be used in particular to control elements of solar protection, screening, closure, ventilation or lighting.

In such an installation, one or more command transmitters must communicate with one or more command receivers. The link between these command transmitters and these command receivers is bidirectional. The different command transmitters and command receivers are communication signal transceivers. They constitute the nodes of the home automation network.

When the transferred information is conveyed using radio waves, certain problems may arise. On the one hand, the range of the transmitters may be insufficient, and on the other hand, there may be local scrambling between two nodes. To solve these problems, a known method is to use repeaters. A repeater may consist of a device dedicated to performing a single function, that of receiving information from an originating point and of transmitting it to a destination point. It may however also perform other functions. It may, for example, be a command transmitter (capable of generating control commands) or be a command receiver linked to an item of equipment, which interprets those commands and executes them. The repeater constitutes a node in the communication network.

US patent application 2002/0044042 or application WO 01/78 307 describes the operation of a communication node performing a repeater function and another function. US patent 6 529 498 also describes, in the general field of networks, a method of generating routing tables in a point-to-multipoint communication. The documents on the state of the art, such as US patent 6 549 783 or US patent 6 539 025, refer mainly to the fields of telecommunications networks.

In order to simplify the task of the installers, and to enable the use of very short range transceivers, the aim has been for communication between remote points in a dwelling to be effected where appropriate by multiple repetition. The communication circuit between a first point, for example a command transmitter, and a second point, for example a command receiver, then passes through one or more repeaters in cascade. The list of repeaters involved in each link is registered in one or more routing tables. The routing table is defined manually or automatically as part of the installation or of a "discovery" process which may be repeated on each change of installation configuration (setting up new nodes in the communication network). In some cases, routing is dynamic; a discovery process for finding the most appropriate route is then initiated on each new communication. These aspects are detailed in US application 6 529 498 or in IEEE publication 802.15.4.

Patent application WO 02/078272 describes a method of communication in a network comprising fixed elements and mobile elements. In this network, before transmitting data to a receiver, a transmitter checks if the receiver is within its range. If the receiver is not within range of the transmitter, this transmitter sends data with a list of repeaters via which the data have to flow.

It is also known from document US 2002/176399 a wireless LAN communications system comprising a plurality of LAN radios that transmit, receive and route messages. Radios that are within range of each other sends messages directly to each other. Radios that are not within range extract route information or use multicast routing protocols.

The multiplication of the number of repeaters gives rise to an increase in the radio spectrum occupancy time. This disadvantage is further amplified in the case of dynamic routing.

Furthermore, the regulations (for example ERC 70-03) require that, as is often practiced in networks, a Listen Before Transmit (LBT) rule be observed by every point of the network before communicating. This rule is used, for example, to ensure that the chosen transmission frequency is definitely free before transmitting, radio silence having to be ascertained for at least a determined period TD, for example 5 milliseconds. The application of this "LBT" rule considerably lengthens the time between the generation of a control command by a command transmitter and its execution by an item of equipment to which it is sent, when, due to congestion in the network, several attempts are necessary for each repeater to access an available frequency. If it reaches several seconds, this time is still insignificant when it involves, for example, a data transmission between a digital camera and a computer. On the other hand, for the remote control of an item of electrical equipment in a building, the user of a command transmitter should be able to receive in a substantially instantaneous manner (not more than a few tenths of a second) the return signal from the remote command receiver associated with the equipment.

The operation of the BLUETOOTH technology is known from the publication « BLUETOOTH 1.1 : Connect Without Cables » Second Edition (december 2001). This technology permits a transmitter (master I) of a first piconet to transmit a data to a receiver (master II or slave) of a second piconet via a third element that belongs to the two piconets and that is a slave of both piconets or that is a slave in the first piconet and a master in the second piconet. This technology does not use a "Listen Before Transmit" rule.

In BLUETOOTH network, the data transfers between master and slaves occured during a scan of several possible frequencies according to a pseudorandom sequence, this sequence being defined by a data transmitted from master to the slaves. BLUETOOTH technology is used to connect several mobile devices. The mobility of the devices makes it is necessary to often define the links with one another, by dynamically constituting piconets.

During a device discovery procedure, permitting to add one or several new devices in a piconet, the interferences between devices responding to an inquiry transmitted by a master is not avoided by a "Listen Before Transmit" rule but by the use of a random back-off period between the inquiry and the answer to this inquiry.

In a scatternet, at least a device belongs simultaneously to two piconets. Due to their dynamic constitution, two piconets may be mixed. In such a case, interferences are mostly avoided, by scan sequences of the frequencies that are different for each piconet. If a same frequency is used simultaneously by a device of the first piconet and a device of the second piconet, a procedure schedules a later step of retransmission of the data that cannot have been received due to interference.

In a piconet, two slave devices only can exchange data via the master of the piconet, even if these two slave devices are within range of each other. This multiplication of the number of repeaters gives rise to an increase in the radio spectrum occupancy time.

The aim of the invention is to implement a method of communication providing a solution to this problem and providing improvements over the known methods of prior art.

The invention proposes in particular a control method that is simple to implement and, while observing the "LBT" rule, solves the problems of radio spectrum occupancy and reduces the delay between the generation of a control command by a command transmitter and its execution by an item of equipment to which it is sent.

The method according to the invention is characterized by the characterizing part of claim 1.

Several embodiments of the method are defined by dependent claims 2 to 5.

The communication method can be used for the creation of a durable link between the first communication point and the second communication point, as defined in claim 6.

The home automation network according to the invention is characterized in that each of the communication points comprises software means for implementing the communication method, as defined in claim 7.

The attached drawing represents, as an example, a network for implementing the method according to the invention.

The sole figure is a diagram of such a network.

The network 1 shown in the sole figure comprises three communication points: a command transmitter point AX, a command receiver point BX and an intermediate repeater point RX. These different communication points each present means of transmitting radio signals and means of receiving radio signals by which they can communicate in a bidirectional manner. These means may use a frequency-agile or frequency-hopping spread spectrum technique. Each point also comprises a logic processing unit, such as a microcontroler and a memory that contains programs for the implementation of the method according to the invention.

The command transmitter AX comprises for example means of generating control commands and is used to control an item of electrical equipment remotely. It may comprise a keypad with control keys and a monitoring screen. A frame transmitted by the command transmitter AX contains the address of the intended recipient of that frame and a message formed of control commands or data.

The command receiver BX is for example intended to control an item of home automation network equipment based on control commands generated by the command transmitter AX. The command receiver BX then also comprises a control unit. The item of home automation network equipment is for example a solar protection, a roller shutter, a ventilation flap or a lighting device. The command receiver BX may also be connected to one or more building convenience or security sensors (alarms, presence detectors, etc.).

The repeater RX for its part comprises a memory in which to store the information it receives before sending it.

The different communication points, AX, BX, RX, may also perform other functions that are not necessary to explain the operating principle of the communication method. For example, each of the points may perform a command generation and transmission function and/or a repeater function and/or a command receiver function.

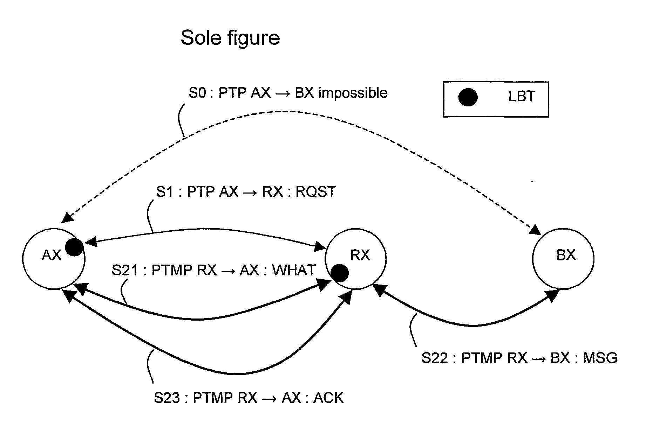

An implementation of the method according to the invention is described below with reference to figure 1.

It is assumed that, in a network configuration phase, the command transmitter AX has learned the addresses of the repeater RX and of the command receiver BX and that the command transmitter AX knows that it cannot reach the command receiver BX in a direct manner by a point-to-point communication represented by a dotted arrow referenced S0. On the other hand, it is assumed that the command transmitter AX knows that it can reach the command receiver BX by using the repeater RX as a communication relay.

If the communication between the first communication point AX and the second communication point BX is possible, the points AX and BX interchange data directly.

It is also assumed that the command transmitter AX must communicate data or commands MSG to the command receiver BX.

In a first step, after applying the "LBT" rule to check that the transmission channel it envisages using is free, the command transmitter AX opens a first communication session S1 in the point-to-point mode PTP with the repeater RX. The frame transmitted by the transmitter AX contains the address of the repeater RX and a help request. The command transmitter AX closes the session S1 when it has received an acknowledgement of receipt of the request from the repeater RX.

In a second step, in its turn, the repeater RX applies the "LBT" rule to check that the transmission channel it envisages using is free and opens a second communication session S2 in point-to-multipoint mode PTMP between it, on the one hand, and the command transmitter AX and the command receiver BX, on the other hand.

In a first sub-step S21, the repeater RX seeks information from the command transmitter AX concerning the content of the message to be transmitted and concerning the recipient to be reached. The transmitter sends to it in return the content of the message MSG and the address or the identifier of the recipient, the receiver BX.

In a second sub-step S22, the repeater RX transmits to the command receiver BX the content of the message MSG that it has received from the command transmitter AX, indicating the source of the message. The command repeater RX then receives from the command receiver BX at least one acknowledgement of receipt, but also where appropriate a return message such as a direct response or an authentication request.

The sub-steps S21 and S22 are repeated as many times as necessary, for example in the case of a dialog for the authentication of the command transmitter AX by the command receiver BX. The repeater RX keeps control for the duration of these interchanges which do not require any further application of the "LBT" rule provided that a delay always less than the duration TD is observed between the transmission of frames. During these interchanges, as is known in the state of the art, the different communication points concerned may transmit wait frames if the control unit to which they are linked is not ready to supply the required data (for example in the case of an authentication calculation).

In a last sub-step S23, the repeater RX transmits to the command transmitter AX, from the command receiver BX, at least one acknowledgement of receipt or of successful execution of the transmitted command.

The repeater RX then closes the second session S2.

The method described enables the "LBT" rule to be applied one time fewer than the shortest of the successions of direct sessions in point-to-point mode; that means a first communication session in point-to-point mode between the command transmitter AX and the repeater RX requiring a first application of the "LBT" rule, then a second communication session in point-to-point mode between the repeater RX and the command receiver BX requiring a second application of the "LBT" rule, and finally, a third communication session in point-to-point mode between the repeater RX and the command transmitter AX requiring a third application of the "LBT" rule.

The implementation of the method according to the invention increases in value as the number of interchanges increases. However, even when restricted to the case of a single transmission from the command transmitter AX to the command receiver BX and a return from the command receiver BX to the command transmitter AX, the minimum reduction is from three applications of the "LBT" rule to two applications of the "LBT" rule.

Provision can also be made for, during the first help request session S1, the command transmitter AX to transmit directly to the repeater RX at one and the same time the help request, the content of the message MSG to be transmitted and the address of the recipient BX. The sub-step S21 is then omitted. This mode of implementation requires that the transmission protocol provide for a frame format containing both a repeater recipient identifier and a final recipient identifier. On the other hand, it may prove to be less advantageous than the preceding mode of implementation if the volume of data to be transmitted requires several interchanges, because it then involves considerable buffer memory capacity in the repeater RX.

During the first help request communication session S1, provision can also be made for the command transmitter AX to transmit there and then to the repeater RX at least the address of the recipient. Thus, when the repeater RX opens the communication session S2 in point-to-multipoint mode, it can then begin by establishing a communication with the command receiver BX without data transmission and, immediately after verifying the possibility of communicating with the command receiver BX, the repeater RX polls the command transmitter AX so that the latter can transmit to it the content of the message MSG.

So, for the rapid implementation of the method, it is necessary that the repeater RX already be known to the command transmitter AX as a repeater that can access the command receiver BX. This may result from learning, either on installation or by the periodic use of a discovery process. For example, in a network larger than that described containing several potential repeaters for sending a message from one point to another, each potential repeater can list all the command receivers within its range, with transmission quality index and each command transmitter can poll all the potential repeaters and thus know, if necessary, the repeater most capable of satisfying a given link.

Also, the command receiver BX must be able to execute the control commands transmitted by the command transmitter AX. This requires a pairing procedure. For example, the command receiver BX can, by means of a button, be placed in a particular learning mode which makes it capable of registering a particular authentication key originating from the command transmitter AX. This pairing procedure can be performed through the repeater RX if the command receiver BX is not within range of the command transmitter AX.

It is possible that the command transmitter AX knows several repeaters, either to reach different command receivers or to reach the same command receiver. In the latter case, the session S1 is addressed to the repeater known by the command transmitter AX to have the best rate of transmission to the command receiver to be reached. If there is no reply for whatever reason, the session is addressed to a substitute repeater. In this case, it is preferable to use a first communication session S1 of the point-to-multipoint type.

Finally, the method applies in the same manner whether the communication point AX is, as described, a command transmitter wanting to communicate with a communication point BX being a command receiver or whether the reverse is the case.

The invention can be used to replace a point-to-multipoint communication between a communication point AX and:
- communication points BX and CX reachable via a point RX1,
- a communication point DX reachable via a point RX2,
- communication points EX, FX and GX within range of the point AX by:

- a point-to-multipoint communication session PTMP opened and closed by the point AX and enabling interchanges between the point AX and the points EX, FX, GX,
- a point-to-point communication session PTP opened and closed by the point AX and invoking the point RX1,
- a point-to-multipoint communication session PTMP opened and closed by the point RX1 enabling interchanges between the point RX1 and the points AX, BX, CX,
- a point-to-point communication session PTP opened and closed by the point AX and polling the point RX2,
- a point-to-multipoint communication session PTMP opened and closed by the point RX2 enabling interchanges between the point RX2 and the points AX, DX.

## Claims

1. A method of communication using radio waves between a first communication point (AX) and a second communication point (BX) via at most one auxiliary communication point (RX), the communication points (AX, BX and RX) belonging to one and the same home automation network for the remote control of equipment providing convenience and/or security in a building, in which a "Listen Before Transmit" (LBT) rule is usually observed by a point of the network before communicating, **characterized in that** the auxiliary communication point (RX) is used only if the communication between the first communication point (AX) and the second communication point (BX) is not possible, **in that**, in such a case, it comprises, at first, a first communication session of the point-to-point type between the first communication point (AX) and the intermediate communication point (RX), then a second communication session of the point-to-multipoint type between the intermediate communication point (RX), on the one hand, and the first communication point (AX) and the second communication point (BX), on the other hand, a "Listen Before Transmit" (LBT) rule being observed before the first communication session and before the second communication session while, during the second communication session, the information are interchanged between the first communication point (AX) and the second communication point (BX) via the auxiliary communication point (RX) by using a same frequency and without the use of a "Listen Before Transmit" (LBT) rule.

2. The communication method as claimed in claim 1, **characterized in that**, in the first communication session, the first communication point (AX) sends a

3. The communication method as claimed in claim 2, **characterized in that** the help request comprises the address of the second communication point (BX) and/or the content of a message (MSG) to be transmitted. help request to the intermediate communication point (RX).

4. The communication method as claimed in one of the preceding claims, **characterized in that**, in a preliminary step, the first communication point (AX) learns that the intermediate communication point (RX) is a means by which it can communicate with the second communication point (BX) .

5. The communication method as claimed in one of the preceding claims, **characterized in that** the intermediate communication point (RX) is identified as being a means of access to the second communication point (BX) during a discovery procedure.

6. Use of the communication method as claimed in one of the preceding claims for the creation of a durable link between the first communication point (AX) and the second communication point (BX).

7. A home automation network using radio waves, comprising at least three communication points (AX, BX, RX) provided with transceivers of radio signals, **characterized in that** each of the communication points (AX, BX, RX) comprises software means for implementing the communication method as claimed in one of claims 1 to 5.

## Patentansprüche

1. Verfahren zur Kommunikation zwischen einem ersten Kommunikationspunkt (AX) und einem zweiten Kommunikationspunkt (BX) über höchstens einen Hilfskommunikationspunkt (RX) unter Verwendung von Funkwellen, wobei die Kommunikationspunkte (AX, BX und RX) zu ein und demselben Domotiknetzwerk zur Fernsteuerung einer der Bequemlichkeit und/oder der Sicherheit eines Gebäudes dienenden Einrichtung gehören, in welcher eine "Listen-Before-Transmit"(LTB)-Regel gewöhnlich an einem Punkt des Netzwerks vor der Übertragung befolgt wird, **dadurch gekennzeichnet, dass** der Hilfskommunikationspunkt (RX) nur verwendet wird, wenn die Übertragung zwischen dem ersten Kommunikationspunkt (AX) und dem zweiten Kommunikationspunkt (BX) nicht möglich ist, und dass es in einem solchen Falle zunächst eine erste Kommunikationssitzung vom Punkt-zu-Punkt-Typ zwischen dem ersten Kommunikationspunkt (AX) und dem Zwischenkommunikationspunkt (RX) und dann eine zweite Kommunikationssitzung vom Punkt-zum-Vielpunkt-Typ zwischen dem Zwischenkommunikationspunkt (RX) einerseits sowie dem ersten Kommunikationsspunkt AX) und dem zweiten Kommunikationspunkt (BX) andererseits einschliesst, wobei eine "Listen-Before-Transmit"(LBT)-Regel vor der ersten Kommunikationssitzung und vor der zweiten Kommunikationssitzung befolgt wird, während bei der zweiten Kommunikationssitzung die Informationen zwischen dem ersten Kommunikationspunkt (AX) und dem zweiten Kommunikationspunkt (BX) über den Hilfskommunikationspunkt (RX) unter Verwendung derselben Frequenz und ohne die Verwendung einer "Listen-Before-Transmit"(LBT)-Regel ausgetauscht werden.

2. Verfahren nach Anspruch 1, **dadurch gekennzeichnet, dass** bei der ersten Kommunikationssitzung der erste Kommunikationspunkt (AX) eine Hilfsanforderung an den Zwischenkommunikationspunkt (RX) sendet.

3. Verfahren nach Anspruch 2, **dadurch gekennzeichnet, dass** die Hilfsanforderung die Adresse des zweiten Kommunikationspunktes (BX) und/oder den Inhalt einer zu übermittelnden Nachricht (MSG) einschliesst.

4. Verfahren nach einem der vorangehenden Ansprüche, **dadurch gekennzeichnet, dass** in einem ersten Schritt der erste Kommunikationspunkt (AX) lernt, dass der Zwischenkommunikationspunkt (RX) ein Mittel darstellt, durch welches er mit dem zweiten Kommunikationspunkt (BX) in Verbindung treten kann.

5. Verfahren nach einem der vorangehenden Ansprüche, **dadurch gekennzeichnet, dass** der Zwischenkommunikationspunkt (RX) als ein Mittel für den Zugang zum zweiten Kommunikationspunkt (BX) während eines Entdeckungsverfahrens identifiziert wird.

6. Verwendung eins Kommunikationsverfahrens nach einem der vorangehenden Ansprüche zur Schaffung einer dauerhaften Verbindung zwischen dem ersten Kommunikationspunkt (AX) und dem zweiten Kommunikationspunkt (BX).

7. Domotiknetzwerk unter Verwendung von Funkwellen, welches wenigstens drei Kommunikationspunkte (AX, BX, RX) aufweist, die mit Funksignal-Transceivern ausgerüstet sind, **dadurch gekennzeichnet, dass** jeder der Kommunikationspunkt (AX, BX, RX) Software-Mittel zum Ausführen des Kommunikationsverfahrens nach einem der Ansprüche 1 bis 5 aufweist.

## Revendications

1. Procédé de communication par le biais d'ondes radioélectriques entre un premier point de communication (AX) et un deuxième point de communication (BX) par l'intermédiaire d'au plus un point auxiliaire de communication (RX), les points de communication (AX, BX et RX) appartenant à un même réseau domotique de commande à distance d'équipements assurant le confort et/ou la sécurité dans un bâtiment, dans lequel une règle d'écoute préalable (« Listen Before Transmit ») est en général observée par un point du réseau avant de communiquer, **caractérisé en ce que** le point auxiliaire de communication (RX) est utilisé uniquement si la communication entre le premier point de communication (AX) et le deuxième point de communication (BX) n'est pas possible, **en ce que**, dans un tel cas, il comprend, d'abord, une première session de communication de type point à point entre le premier point de communication (AX) et le point intermédiaire de communication (RX), puis une deuxième session de communication de type point à multipoint entre le point intermédiaire de communication (RX), d'une part, et le premier point de communication (AX) et le deuxième point de communication (BX), d'autre part, une règle d'écoute préalable étant observée avant la première session de communication et avant la deuxième session de communication alors que, durant la deuxième session de communication, les informations sont échangées entre le premier point de communication (AX) et le deuxième point de communication via le point intermédiaire de communication (RX) en utilisant une même fréquence et sans utilisation d'une règle d'écoute préalable.

2. Procédé de communication selon la revendication 1, **caractérisé en ce que**, dans la première session de communication, le premier point de communication (AX) adresse au point intermédiaire de communication (RX), une requête d'aide.

3. Procédé de communication selon la revendication 2, **caractérisé en ce que** la requête d'aide comprend l'adresse du deuxième point de communication (BX) et/ou le contenu d'un message (MSG) à transmettre.

4. Procédé de communication selon l'une des revendications précédentes, **caractérisé en ce que**, dans une étape préliminaire, le premier point de communication (AX) apprend que le point intermédiaire de communication (RX) est un moyen lui permettant de communiquer avec le deuxième point de communication (BX).

5. Procédé de communication selon l'une des revendications précédentes, **caractérisé en ce que** le point intermédiaire de communication (RX) est identifié comme étant un moyen d'accès au deuxième point de communication (BX) au cours d'une procédure de découverte.

6. Utilisation du procédé de communication selon l'une des revendications précédentes pour la création d'un lien durable d'authentification entre le premier point de communication (AX) et le deuxième point de communication (BX).

7. Réseau domotique de communication par le biais d'ondes radioélectriques, comprenant au moins trois points de communication (AX, BX, RX) munis d'émetteurs-récepteurs de signaux radioélectriques, **caractérisé en ce que** chacun des points de communication (AX, BX, RX) comprend des moyens logiciels permettant la mise en oeuvre du procédé de communication selon l'une des revendications 1 à 5.
